# EUROPEAN PATENT SPECIFICATION

(11) **EP 2 629 966 B1**
(45) Date of publication and mention of the grant of the patent: **30.12.2020**
(21) Application number: 11834990.1
(22) Date of filing: 18.10.2011
(51) Int. Cl.: B29D 11/00, B29C 48/08, B29C 48/21, G02B 3/00

(54) **ASPHERICAL GRIN LENS**
ASPHÄRISCHE GRIN-LINSE
LENTILLE ASPHÉRIQUE GRIN

(30) Priority: 18.10.2010 US 394059 P; 18.11.2010 US 415125 P
(43) Date of publication of application: 28.08.2013
(73) Proprietor: Case Western Reserve University, Cleveland, OH 44106 (US)
(72) Inventor: BAER, Eric, Cleveland Heights, OH 44106 (US); HILTNER, Anne, P., Cleveland, OH 44120 (US); PONTING, Michael, T., Cleveland Heights, OH 44106 (US)
(74) Representative: Maiwald Patent- und Rechtsanwaltsgesellschaft mbH
(86) International application number: PCT/US2011/056713
(87) International publication number: WO 2012/054482

(56) References cited:
- JP-A- H08 118 497
- KR-A- 20090 012 240
- US-A- 4 772 105
- US-A- 5 044 737
- US-A- 5 568 316
- US-A1- 2001 043 398
- US-A1- 2004 042 729
- US-A1- 2005 105 191
- US-A1- 2005 105 191
- US-A1- 2005 161 840
- US-B1- 6 229 654
- US-B2- 7 740 354
- J. S Shirk ET AL: "Biomimetic Gradient Index (GRIN) Lenses", NRL REVIEW, 1 January 2006 (2006-01-01), XP055281478, Retrieved from the Internet: URL:http://www.nrl.navy.mil/content_images /06FA1.pdf [retrieved on 2016-06-17]

## Description

### FIELD OF THE INVENTION

The present invention relates to gradient refractive index (GRIN) lenses and, in particular, relates to an aspherical GRIN lens that has a designer GRIN distribution.

### BACKGROUND

In a conventional lens, an incoming light ray is refracted when it enters the shaped lens surface because of the abrupt change of the refractive index from air to a homogeneous lens material. The surface shape of the lens determines the focusing and imaging properties of the lens. In a GRIN lens, there is a continuous variation of the refractive index within the lens material. In a simple GRIN lens, plane optical surfaces can be used. The light rays are continuously bent within the lens. The focusing properties are determined by the variation of refractive index within the lens material.

U.S. Patent No. 5,262,896 describes the fabrication of axial gradient lenses by the controlled diffusion process. The blanks for the fabrication of such gradient lenses can be made by a variety of processes, such as SOL-GEL, infusion, and diffusion and may be glass, plastic or other suitable optical material.

U.S. Patent No. 4,956,000 describes a method and apparatus for fabricating a lens having a radially non-uniform but axially symmetrical distribution of lens material, in which the lens size and shape is determined by the selective direction and condensation of vaporized lens material onto a substrate.

U.S. Patent No. 5,236,486 describes the forming of a cylindrical or spherical gradient lens blank from an axial gradient lens blank by heat molding (slumping). This process produces a monolithic lens with a continuous index of refraction profile.

U.S. Patent No. 7,002,754 describes a hierarchically multilayered polymer composite for graded index of refraction (GRIN) lenses and a method to fabricate the same.

### SUMMARY

This application relates to an aspherical GRIN lens that has a designer GRIN distribution and to a method of fabricating the aspherical GRIN lens.

An article where details of an aspheric GRIN distribution lens, the manufacturing method and materials therefore, is disclosed by: J. S Shirk ET AL: "Biomimetic Gradient Index (GRIN) Lenses", NRL REVIEW, 1 January 2006 (2006-01-01).

The aspherical GRIN lens can include a hierarchically multilayered polymer composite and be formed in a multi-stage process. In an aspect of the application, a set of multilayered polymer composite films are fabricated, each with a different refractive index. An ordered set of these multilayered polymer composite films are assembled into a multilayered composite GRIN sheet with the desired index gradient. The multilayered composite GRIN sheet can then be shaped into an aspherical lens that has a specified GRIN distribution.

The aspherical GRIN lens described herein can be used in a wide range of applications. For example, the aspherical GRIN lens may be used in imaging applications, such as small camera applications including but not limited to camera phones, surveillance cameras, medical imaging tools (*e.g.,* endoscopes), and military imaging (*e.g.,* scopes, space cameras) as well as non-image forming systems, such as energy collection devices, solar cells, solar collectors, solar concentrators, beam shaping devices, and other devices that require a lens with very short or very long (infinite) focal lengths. Furthermore, the aspherical GRIN lens may be used in biological implants, such as synthetic copies of human lenses to produce implantable devices for human or animal vision. More specifically, the aspherical GRIN lens may be used to produce devices that are implantable as optical materials to improve damaged or deteriorating human vision.

Other objects and advantages and a fuller understanding of the invention will be had from the following detailed description of the preferred embodiments and the accompanying drawings.

### BRIEF DESCRIPTION OF THE DRAWINGS

Fig. 1 is a schematic illustration multilayered composite bi-convex GRIN lens with an internal parabolic-shaped index gradient distribution; and,
Fig. 2 is a plot of the compositionally dependent refractive index of deformable multilayer composite ethylene oxide/tetrafluoroethylene hexafluoropropylene vinylidene (EO/THV) polymer films based on EO volume composition.

### DETAILED DESCRIPTION

This application relates to gradient refractive index (GRIN) lenses and, in particular, relates to an aspherical GRIN lens that has a designer GRIN distribution. The aspherical GRIN lens can include a hierarchical composite structure that can be readily tailored to provide aspherical lens shapes and GRIN distributions. The aspherical lens shapes and GRIN distributions allow for larger corrections of lens aberrations and production of unique optics with performance unachievable with spherical surfaces.

In an embodiment of the application, the aspherical GRIN lens can be fabricated in a multi-stage process. In the multi-stage process, a set of multilayered polymer composite films can be fabricated. Each polymer composite film can have a different refractive index. An ordered set of these multilayered polymer composite films can be assembled into the hierarchical multilayered composite GRIN sheet with the desired index gradient. The assembled composite GRIN sheet can then be shaped into an aspherical lens with a spherical or aspheric GRIN distribution.

The multilayered polymer composite films used to form the hierarchical structure of the GRIN lens can include up to 500,000 layers alternating between at least two types: (A) and (B). Layers of type (A) are comprised of component (a) and layers of type (B) are comprised of component (b). Each of the layers (A) and (B) of the multilayered polymer composite film may have a thickness in the range of from about 5 nm to about 1,000 µm.

A wide variety of thermoplastic polymeric materials can be used to form the layers (A) and (B). Such materials include, but are not limited to glassy polymers, crystalline polymers, liquid crystalline polymers, and elastomers. The term "polymer" or "polymeric material" as used herein denotes a material having a weight average molecular weight (MW) of at least 5,000. The polymer may, for example, be an organic polymeric material. The term "oligomer" or "oligomeric material" as used herein denotes a material having a weight average MW from 1,000 to less than 5,000. Such oligomeric materials can be, for example, glassy, crystalline or elastomeric polymeric materials.

Examples of polymeric materials that can be used to form the layers A and B can include but are not limited to polyethylene naphthalate and isomers thereof, such as 2,6-, 1,4-, 1,5-, 2,7-, and 2,3-polyethylene naphthalate; polyalkylene terephthalates such as polyethylene terephthalate, polybutylene terephthalate, and poly-1,4-cyclohexanedimethylene terephthalate; polyimides, such as polyacrylic imides; polyetherimides; styrenic polymers, such as atactic, isotactic and syndiotactic polystyrene, α-methyl-polystyrene, para-methyl-polystyrene; polycarbonates such as bisphenol-A-polycarbonate (PC); poly(meth)acrylates such as glassy poly(methyl methacrylate), poly(methyl methacrylate), poly(isobutyl methacrylate), poly(propyl methacrylate), poly(ethyl methacrylate), poly(butyl acrylate) and poly(methyl acrylate) (the term "(meth)acrylate" is used herein to denote acrylate or methacrylate); cellulose derivatives, such as ethyl cellulose, cellulose acetate, cellulose propionate, cellulose acetate butyrate, and cellulose nitrate; polyalkylene polymers, such as polyethylene, polypropylene, polybutylene, polyisobutylene, and poly(4-methyl)pentene; fluorinated polymers, such as perfluoroalkoxy resins, polytetrafluoroethylene, fluorinated ethylene-propylene copolymers, polyvinylidene fluoride, and polychlorotrifluoroethylene and copolymers thereof; chlorinated polymers, such as polydichlorostyrene, polyvinylidene chloride and polyvinylchloride; polysulfones; polyethersulfones; polyacrylonitrile; polyamides; polyvinylacetate; polyether-amides.

Other polymer materials that can be used to form layers A and B are copolymers, such as styrene-acrylonitrile copolymer (SAN), for example, containing between 10 and 50 wt %, or between 20 and 40 wt %, acrylonitrile, SAN-17, styrene-ethylene copolymer; and poly(ethylene-1,4-cyclohexylenedimethylene terephthalate) (PETG). Additional polymeric materials include an acrylic rubber; electro-optic polymers, such as polyoxyethylene (EO) or polyoxypropylene (PO); tetrafluoroethylene hexafluoropropylene vinylidene (THV); isoprene (IR); isobutylene-isoprene (IIR); butadiene rubber (BR); butadiene-styrene-vinyl pyridine (PSBR); butyl rubber; polyethylene; chloroprene (CR); epichlorohydrin rubber; ethylene-propylene (EPM); ethylene-propylene-diene (EPDM); nitrile-butadiene (NBR); polyisoprene; silicon rubber; styrene-butadiene (SBR); and urethane rubber. Still, additional polymeric materials include liquid crystalline polymers, copolymers, and block or graft copolymers.

In addition, each individual layer (A) and (B) may include blends of two or more of the above-described polymers or copolymers. The components (a) and (b) of such a blend may be substantially miscible and, thus, do not affect the transparency of the blend. Alternatively, one or more of the components (a) and (b) of the blend may be immiscible or partially miscible.

One consideration in selecting the materials for the composite GRIN sheet is the difference in refractive index between the polymeric components (a) and (b) of the layers (A) and (B). In particular, the maximum index gradient of the multilayer polymer composite and, thus, the GRIN sheet is dictated by the difference between the indexes of the polymer components (a) and (b). The focal length, the thickness, and the shape of the GRIN lens likewise depend on the index gradient that can be achieved. Accordingly, one or more of the components (a) and (b) of the composite film can include organic or inorganic materials designed to increase or decrease the refractive index of the component. The organic or inorganic materials may include, for example, nanoparticulate materials, dyes, and/or other additives.

The multilayered polymer composite films can be fabricated with a predetermined range of refractive indexes and an arbitrarily small index difference between them. This may be done, for example, by altering the relative thickness of the layers (A) and (B). In instances where the elastic modulus of the component polymers (a) and (b) differs, the refractive index of the composite can be varied mechanically via pressure, tension, compression or shear stresses or a combination of these stresses. As noted, the composite can be fabricated so that one or both of the component polymers (a) and (b) is an elastomer. If the elastic modulus of the component polymers (a) and (b) differs, then the refractive index of one or more of the effective medium composite layers (A) and (B) is variable, relative to the other, mechanically via pressure, tension, compression or shear stresses or a combination of these stresses. The index gradient of the hierarchical GRIN sheet can therefore be varied via tension, compression or shear forces. The refractive index and refractive index gradient changes can also be achieved by any type of mechanical or electrical stimulus, or by magnets attached to the multilayer polymeric composite structure. The changes can be induced by electrostatic effects or by using electroactive or electrooptic component polymers. This provides the materials with a large electro-optical response.

The multilayered polymer composite films can be fabricated by multilayered co-extrusion. For example, the multilayered polymer composite films fabricated may be formed by forced assembly co-extrusion in which two or more polymers are layered and then multiplied several times or traditional multilayer co-extrusion processing where layering is accomplished simultaneously in a single multilayered feed block. These processes can result in large area films (*e.g.,* feet wide by yards wide) consisting of thousands of layers with individual layer thicknesses as thin as 10 nm. When the layer thickness is much less than the wavelength of light, the films behave as effective media and, thus, have unique properties compared to the constituents. The co-extruded GRIN films may have an overall thickness ranging from about 10 nm to about 10 cm, in particular from about 12 µm to about 3 cm including any increments within these ranges.

The multilayered polymer composite films comprising layer (A) and (B) can be stacked to form the hierarchical multilayered composite GRIN sheet. The GRIN sheet may, for example, be formed by layering the multilayered polymer composite films in a hierarchical structure as described and disclosed in U.S. Pat. Nos. 6,582,807, issued June 24, 2003 to Baer et al. and 7,002,754, issued Feb. 21, 2006, to Baer et al. By layering the multilayered polymer composite films, the hierarchical GRIN sheet is given a refractive index gradient. The layering can be done so that the resulting hierarchical GRIN sheet has an index gradient in any direction, such as the axial, radial or spherical direction. The index gradient can be continuous, discrete or stepped. Many gradients can be achieved within the limits imposed by the index of the component polymers (a) and (b) of the layers (A) and (B) in the multilayered polymer composite films.

In any case, adjacent multilayered polymer composite films can be chosen to exhibit progressively different refractive indexes. For example, stacking 5 to 100,000 multilayered polymer composite films will form a hierarchical GRIN sheet from which GRIN lenses can be fabricated as described below. The index gradient of the hierarchical GRIN sheet is determined by the design in which the multilayered polymer composite films are stacked. A particular advantage of this process is that any predetermined index gradient can be easily achieved using multilayered polymer composite films. The index gradient is limited only by the available refractive index range in the multilayered polymer composite films. Due to the aforementioned construction of the GRIN sheet, the sheet has a hierarchical structure on the nanometer scale, micrometer scale, and the centimeter scale.

In some embodiments of the application, the multilayer polymer composite film can be made from two alternating layers (A) and (B) (e.g., ABABA ...) that are formed, respectively, component polymers (a) and (b) referred to as component. The component polymers (a) and (b) can exhibit different refractive indexes and form a multilayer polymer composite film represented by formula (AB)ₓ, where x=(2)ⁿ, and n is the number of multiplier elements and is in the range of from 4 to 18. In other embodiments, the alternating layers A and B can be provided in a multilayer polymer composite film represented by formula (ABA)ₓ or (BAB)ₓ, where x=(2)ⁿ + 1, and n is the number of multiplier elements and is in the range of 2 to 18.

In some embodiments, polymer components (a) and (b) can be independently a glassy polymeric material, a crystalline polymeric material, an elastomeric polymeric material or blends thereof. By way of a non-binding example, when component (a) is a glassy material, component (b) can be an elastomeric material, a glassy material, a crystalline material or a blend thereof. Alternatively, when component (a) is an elastomeric material, component (b) can be an elastomeric material, a glassy material, a crystalline material or a blend thereof. Regardless, component (a) must exhibit a different refractive index than component (b); likewise, layer (A) must exhibit a different refractive index than layer (B).

The multilayered polymer composite film can include a multitude of alternating layers (A) and (B). In some examples, the multilayer polymer composite film can include at least 10 alternating layers (A) and (B), preferably from about 50 to about 500,000 alternating layers, including any increments within these ranges. Each of the layers (A) and (B) may be microlayers or nanolayers. Similarly, additional multilayered polymer composite films may be formed comprised of layers (Aᵢ) and (Bᵢ), which layers are comprised of components (aᵢ) and (bᵢ), respectively. The components (a) and (aᵢ) can be the same or different polymeric materials. Likewise, (b) and (bᵢ) can be the same or different polymeric materials. Further, components (a) and (b) may be the same materials chemically, as long as they can form distinct layers exhibiting different refractive indexes by virtue of secondary physical differences, such as conformational differences between polymeric structures, differences resulting from different processing conditions, such as orientation or MW differences.

The hierarchical GRIN sheet may alternatively include more than two different components. For example, a three component structure of alternating layers (A), (B), and (C) (*e.g.,* ABCABCABC...) of, respectively, components (a), (b), and (c) is represented by (ABC)ₓ, where x is as defined above. A structure that includes any number of different component layers in any desired configuration and combination is included within the scope of the present invention such as (CACBCACBC...).

The hierarchical GRIN sheet can be formed into an aspherical lens that has any predetermined spherical or aspherically symmetric axial or radial GRIN distribution. The hierarchical GRIN sheet may be formed into an aspherical shape by heating the GRIN sheet to a temperature below the lowest melting temperature of any of the polymers within the GRIN sheet. The heated GRIN sheet can then be thermoformed in a die or mold forming the GRIN sheet into an aspherical surface shape that is maintained when the heated GRIN sheet cools. Alternatively or additionally, the hierarchical GRIN sheet can be mechanically or chemically shaped by a suitable process, such as etching, patterning, diamond machining, metallurgical polishing, glass bead honing and the like, or a combination of diamond machining followed by metallurgical polishing or glass bead honing or the like to shape the GRIN sheet into an aspherical shape configuration. In one example, the hierarchical GRIN sheet may be formed into an aspherical shape by a diamond machining process, such as Diamond turning, fly-cutting, and vibration assisted machining (VAM).

Depending on the particular polymeric construction of the aspherical GRIN lens, the lens may be non-deformable, reversibly deformable or irreversible deformable. Accordingly, by using multilayered polymer technology, the lens can be fabricated such that the gradient is varied dynamically and reversibly. This is accomplished, for example, by using dynamically variable multilayer polymeric materials as the individual layers. In particular, the polymeric materials can be fabricated such that the elastic moduli as well as the index of refraction of the alternating polymer layers are different. In these materials, applied stress, such as pressure, tension, compression or sheer stresses or a combination of these stresses, changes the relative layer thickness and, thus, changes the gradient in the lens.

The refractive index and refractive index gradient changes can also be achieved by any type of mechanical or electrical stimulus, or by magnets attached to the multilayer polymeric composite structure. The changes can be induced by electrostatic effects or by using electroactive or electrooptic component polymers. This provides the materials with a large electro-optical response. The sensitivity of the index to stress can be varied by the choice of the component polymers (a) and (b) and their relative initial thickness. Therefore, it is possible to fabricate a variable gradient lens where both the initial gradient and the variability of the gradient with stress can be predetermined.

Optionally, the gradient of the aspherical GRIN lens can varied, reversibly or irreversibly, by axially orienting (*e.g.,* stretching) the hierarchical GRIN sheet and/or multilayered polymer composite film during and/or after fabrication. As pointed out above, the composite film and hence the hierarchical GRIN sheet can be fabricated so that one or both of the component polymers is an elastomer. Axial orientation of the multilayer polymer composite film and/or hierarchical GRIN sheet in at least one direction parallel can vary the gradient distribution of the film or sheet. In one example, a multilayer polymer composite film can be biaxially oriented by stretching the film in a plane that is substantially parallel to a surface of the film. It will be appreciated that although the film can be biaxially oriented by stretching the film in at least two directions, the film can also be stretched in a single direction (*e.g.,* uniaxially oriented) or stretched in multiple directions (*e.g.,* biaxially or triaxially oriented).

In fabricating GRIN lenses, it is also desirable to be able to specify the index gradient from less than 0.01 to as large as possible. With the multilayering technique described herein, a wide variety of index gradients are possible. Since a larger gradient gives a wider range of GRIN lenses that can be made, it is desirable to be able to make a large gradient. This enables a shorter focal length and more aberration correction in a thinner GRIN lens. For multilayered GRIN lenses, the index gradient can be specified from a minimum of 0.001 to a maximum of the difference in refractive index between the polymers constituting the layers. Often the largest possible range is desirable. Preferably, the lens of the multilayer polymeric structure can exhibit an index gradient of 0.01 or higher, preferably in the range of from 0.02 to 1.0, more preferably in the range of from 0.05 to 0.5, including all increments within these ranges.

An important point is that the multilayering technique described herein allows the use of miscible, immiscible or partially miscible polymers to achieve a large index difference. Other GRIN lens fabrication techniques use diffusion techniques to achieve an index gradient. Thus, the examples in the prior art are limited to small index gradients of 0.01 to 0.03.

A second important point is that multilayered lenses can be designed to be used as optical elements over a wide wavelength range from near 40 nm to 1 meter. The specific wavelength range is determined by the polymeric components. In an embodiment of the application, the multilayer polymer structure exhibits an internal transmission greater than 20%, preferably greater than 50%. A transparent multilayered polymer composite structure can be fabricated with a range of refractive indices by appropriate layering of the components. If the layer thickness of each layer is sufficiently thin the composite behaves as an effective medium. The refractive index can be designed to exhibit any value between the indexes of the component polymers by selecting the relative thickness of the component layers. Such a composite can be made with a transparency comparable to the component polymers.

The aspherical GRIN lens described herein can be used in a wide range of applications. For example, the aspherical GRIN lens may be used in imaging applications, such as small camera applications including but not limited to camera phones, surveillance cameras, medical imaging tools (*e.g.,* endoscopes), and military imaging (*e.g.,* scopes, space cameras) as well as non-image forming systems, such as energy collection devices, solar cells, solar collectors, solar concentrators, beam shaping devices, and other devices that require a lens with very short or very long (infinite) focal lengths. Furthermore, the aspherical GRIN lens may be used in biological implants such as synthetic copies of human lenses to produce implantable devices for human or animal vision. More specifically, the aspherical GRIN lens may be used to produce devices that are implantable as optical materials to improve damaged or deteriorating human vision. Such intraoptical lens implants would add wider field of view, improved low light resolution, high resolution imaging, and accommodation in a single implant.

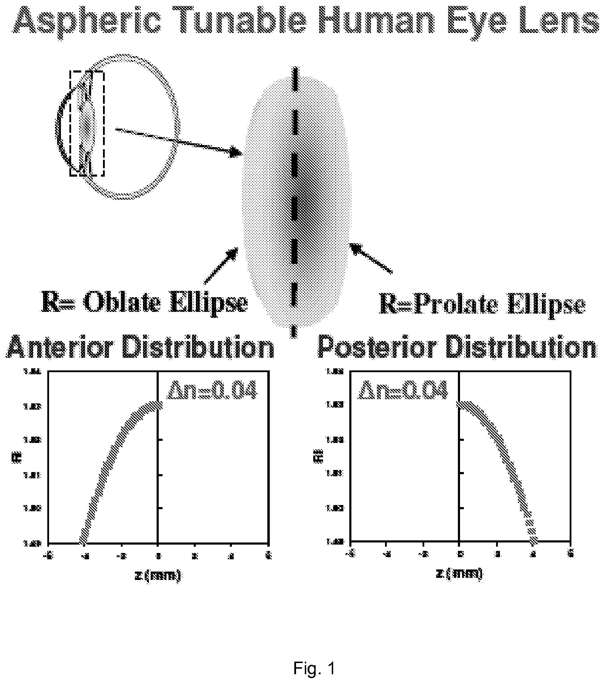

In an embodiment of the application, the multilayered composite GRIN sheet can be used to fabricate an aspheric biconvex lens with a parabolic index gradient as shown in Fig. 1. In particular, the lens defines an oblate ellipse that has a first half-parabolic GRIN distribution and a prolate ellipse that has a second half-parabolic GRIN distribution through the lens thickness directions. In the lens shown in Fig. 1, the refractive index decreases in a direction towards the periphery of the lens. It will be understood, however, that the refractive index could likewise increase in a direction towards the periphery of the lens in accordance with the present invention. It will also be understood that the internal GRIN distribution of the lens can be designed radial and aspheric depending on the desired lens performance.

The aspherical GRIN lens is advantageous over other GRIN sheet constructions because the aspherical shape adds to the correct power of the GRIN distribution to correct wavefronts for spherical and other higher order aberrations. Furthermore, aspheric surface curvatures have the ability to modify optical wavefronts and correct for spherical or higher order aberrations inherent to commercial glass and plastic monolith lens materials. By forming nanolayered GRIN lenses with aspheric surfaces, the present invention increases the design freedom on the lenses to reduce the overall size and weight of the optical system in which the lens is used.

### Example

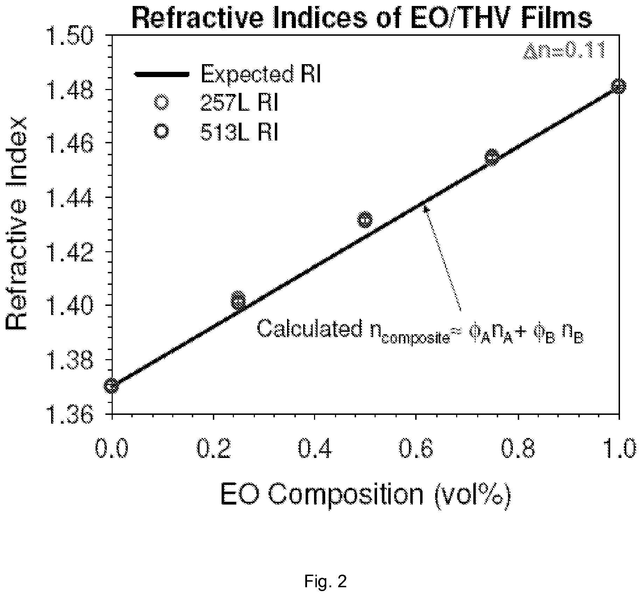

Fig. 2 is a graph illustrating one exemplary construction for the GRIN sheet made of deformable polymeric materials used to construct the aspherical GRIN lens of the present invention. In this example, a series of nanolayered elastomeric THV/EO polymer films were produced and stacked to form GRIN distributions similar to glassy PMMA/SAN-17 systems. In particular, the THV/EO stacked polymer GRIN sheet produced a refractive index range from about 1.37 to about 1.48. The change in refractive index varied with the percentage of EO by volume within each film.

Obviously, numerous modifications and variations of the present invention are possible in light of the above teachings. It is therefore to be understood that within the scope of the appended claims, the invention may be practiced otherwise than as specifically described herein. The preferred embodiments of the invention have been illustrated and described in detail. However, the present invention is not to be considered limited to the precise construction disclosed. Various adaptations, modifications and uses of the invention may occur to those skilled in the art to which the invention relates and the intention is to cover hereby all such adaptations, modifications, and uses which fall within the scope of the appended claims.

## Claims

1. A method of fabricating a gradient refractive index, GRIN, lens comprising:
co-extruding a first polymer material having a first refractive index and a second polymer material having a second refractive index different than the first refractive index to form multilayered polymer composite films;
assembling the multilayered polymer composite films into a multilayer composite GRIN sheet; and
shaping the multilayered composite GRIN sheet into an aspherical GRIN lens, wherein the gradient refractive index is aspherical, **characterized in that** the lens has a parabolic refractive index gradient, wherein the lens defines an oblate ellipse that has a first half-parabolic GRIN distribution and a prolate ellipse that has a second half-parabolic GRIN distribution through the lens thickness direction, wherein the refractive index decreases or increases in a direction towards the periphery of the lens.

2. The method of claim 1, wherein the GRIN sheet is thermoformed, molded, and/or machined into an aspherical GRIN lens.

3. The method of claim 1, wherein each of the multilayered polymer composite films includes a plurality of at least two alternating layers (A) and (B) represented by formula (AB)ₓ, where x=2ⁿ, and n is in the range of from 2 to 18;
wherein layer (A) is comprised of component (a) and layer (B) is comprised of component (b); and
wherein the components (a) and (b) have different refractive indexes.

4. The method of claim 3, wherein the components (a) and (b) are selected from the group consisting of a polymeric material, a composite polymer and a polymer blend.

5. The method of claim 4, wherein the polymeric material is selected from the group consisting of a glassy material, a crystalline material, a liquid crystalline material, and an elastomeric material.

6. The method of claim 3, wherein the layers have a thickness of from 5 nm to 1,000 µm.

7. The method of claim 3, wherein the multilayered composite polymer films are stacked in ordered layers to form a hierarchical multilayered composite GRIN sheet; and wherein adjacent multilayered composite polymer films are chosen to exhibit progressively different refractive indexes.

8. The method of claim 3, wherein the multilayered composite polymer film comprises at least 10 alternating layers.

9. The method of claim 3, wherein the multilayered composite GRIN sheet is comprised of from 5 to 100,000 multilayered polymer composite films.

10. The method of claim 3, wherein components (a) and (b) are chemically the same materials.

11. The method of claim 4, wherein the polymeric material is selected from the group consisting of a polyethylene naphthalate, an isomer thereof, a polyalkylene terephthalate, a polyimide, a polyetherimide, a styrenic polymer, a polycarbonate, a poly(meth)acrylate, a cellulose derivative, a polyalkylene polymer, a fluorinated polymer, a chlorinated polymer, a polysulfone, a polyethersulfone, polyacrylonitrile, a polyamide, polyvinylacetate, a polyether-amide, a styrene-acrylonitrile copolymer, a styrene-ethylene copolymer, poly(ethylene-1,4-cyclohexylenedimethylene terephthalate), an acrylic rubber, isoprene, isobutylene-isoprene, butadiene rubber, butadiene-styrene-vinyl pyridine, butyl rubber, polyethylene, chloroprene, epichlorohydrin rubber, ethylene-propylene, ethylene-propylene-diene, nitrile-butadiene, polyisoprene, silicon rubber, styrene-butadiene, urethane rubber, and polyoxyethylene, polyoxypropylene, and tetrafluoroethylene hexafluoropropylene vinylidene (THV).

12. The method of claim 3, wherein the layers further comprise an organic or inorganic material designed to affect the refractive index.

13. The method of claim 3, exhibiting an index gradient in the range of from 0.02 to 1.0.

14. The method of claim 13, wherein the multilayered polymer composite film or multilayered composite GRIN sheet is uniaxially or biaxially oriented.

15. A gradient refractive index, GRIN, lens, wherein the gradient refractive index is aspherical, **characterized in that** the GRIN lens has a parabolic refractive index gradient, wherein the lens defines an oblate ellipse that has a first half-parabolic GRIN distribution and a prolate ellipse that has a second half-parabolic GRIN distribution through the lens thickness direction, wherein the refractive index decreases or increases in a direction towards the periphery of the lens, the lens comprising:
a co-extruded, multilayered composite GRIN sheet having an aspherical shape;
wherein the multilayered composite sheet includes a plurality stacked co-extruded multilayered polymer composite films;
wherein each of the multilayered polymer composite films includes a plurality of at least two alternating layers (A) and (B) represented by formula (AB)ₓ, where x=2ⁿ, and n is in the range of from 4 to 18;
wherein layer (A) is comprised of component (a) and layer (B) is comprised of component (b); and
wherein the components (a) and (b) have different refractive indexes.

16. The lens of claim 15, wherein the components (a) and (b) are elastomers and the multilayered composite sheet is mechanically and reversibly deformable.

17. The lens of claim 15, wherein the refractive index of the multilayered composite GRIN sheet is varied mechanically by pressure, tension, compression, shear or a combination of these stresses.

18. The lens of claim 15, exhibiting an index gradient in the range of from 0.02 to 1.0.

19. The lens of claim 15, wherein the sheet defines an oblate ellipse, which has a first half-parabolic GRIN distribution, and a prolate ellipse, which has a second half-parabolic GRIN distribution, through the lens thickness.

20. The lens of claim 16, wherein the refractive index decreases in a direction towards a periphery of the lens.

## Patentansprüche

1. Verfahren zur Herstellung einer Linse mit Gradienten-Brechungsindex, GRIN, umfassend:
Koextrudieren eines ersten Polymermaterials mit einem ersten Brechungsindex und eines zweiten Polymermaterials mit einem zweiten Brechungsindex, der sich von dem ersten Brechungsindex unterscheidet, um mehrschichtige Polymerverbundfilme zu bilden;
Zusammenfügen der mehrschichtigen Polymerverbundfilme zu einer mehrschichtigen GRIN-Verbundfolie; und
Formung der mehrschichtigen GRIN-Verbundfolie zu einer asphärischen GRIN-Linse, wobei der Gradienten-Brechungsindex asphärisch ist, **dadurch gekennzeichnet, dass** die Linse einen parabolischen Brechungsindexgradienten aufweist, wobei die Linse eine abgeflachte Ellipse definiert, die eine erste halbparabolische GRIN-Verteilung aufweist, und eine längliche Ellipse, die eine zweite halbparabolische GRIN-Verteilung durch die Linsendickenrichtung aufweist, wobei der Brechungsindex in einer Richtung zur Peripherie der Linse hin abnimmt oder zunimmt.

2. Verfahren nach Anspruch 1, wobei die GRIN-Folie thermogeformt, geformt und/oder spanabhebend zu einer asphärischen GRIN-Linse verarbeitet wird.

3. Verfahren nach Anspruch 1, wobei jeder der mehrschichtigen Polymerverbundfilme eine Vielzahl von mindestens zwei abwechselnden Schichten (A) und (B) enthält, die durch die Formel (AB)ₓ dargestellt werden, wobei x = 2ⁿ und n im Bereich von 2 bis 18 liegt;
wobei die Schicht (A) aus der Komponente (a) besteht und die Schicht (B) aus der Komponente (b) besteht; und
wobei die Komponenten (a) und (b) unterschiedliche Brechungsindizes aufweisen.

4. Verfahren nach Anspruch 3, wobei die Komponenten (a) und (b) aus der Gruppe, bestehend aus einem Polymermaterial, einem Verbundpolymer und einem Polymergemisch, ausgewählt sind.

5. Verfahren nach Anspruch 4, wobei das Polymermaterial aus der Gruppe, bestehend aus einem glasartigen Material, einem kristallinen Material, einem flüssigkristallinen Material und einem elastomeren Material, ausgewählt ist.

6. Verfahren nach Anspruch 3, wobei die Schichten eine Dicke von 5 nm bis 1000 µm aufweisen.

7. Verfahren nach Anspruch 3, wobei die mehrschichtigen Verbundpolymerfilme in geordneten Schichten gestapelt werden, um eine hierarchische mehrschichtige GRIN-Verbundfolie zu bilden; und wobei benachbarte mehrschichtige Verbundpolymerfilme so ausgewählt werden, dass sie progressiv unterschiedliche Brechungsindizes aufweisen.

8. Verfahren nach Anspruch 3, wobei der mehrschichtige Verbundpolymerfilm mindestens 10 abwechselnde Schichten umfasst.

9. Verfahren nach Anspruch 3, wobei die mehrschichtige GRIN-Verbundfolie aus 5 bis 100000 mehrschichtigen Polymerverbundfilmen besteht.

10. Verfahren nach Anspruch 3, wobei die Komponenten (a) und (b) chemisch die gleichen Materialien sind.

11. Verfahren nach Anspruch 4, wobei das Polymermaterial aus der Gruppe, bestehend aus einem Polyethylennaphthalat, einem Isomer davon, einem Polyalkylenterephthalat, einem Polyimid, einem Polyetherimid, einem Styrolpolymer, einem Polycarbonat, einem Poly(meth)acrylat, einem Cellulosederivat, einem Polyalkylenpolymer, einem fluorierten Polymer, einem chlorierten Polymer, einem Polysulfon, einem Polyethersulfon, Polyacrylnitril, einem Polyamid, Polyvinylacetat, einem Polyetheramid, einem Styrol-Acrylnitril-Copolymer, einem Styrol-Ethylen-Copolymer, Poly(ethylen-1,4-cyclohexylendimethylente-rephthalat), einem Acrylkautschuk, Isopren, Isobutylen-Isopren, Butadienkautschuk, Butadien-Styrol-Vinylpyridin, Butylkautschuk, Polyethylen, Chloropren, Epichlorhydrinkautschuk, Ethylen-Propylen, Ethylen-Propylen-Dien, Nitril-Butadien, Polyisopren, Silikonkautschuk, Styrol-Butadien, Urethan-Kautschuk sowie Polyoxyethylen, Polyoxypropylen und Tetrafluorethylenhexafluorpropylenvinyliden (THV), ausgewählt ist.

12. Verfahren nach Anspruch 3, wobei die Schichten weiterhin ein organisches oder anorganisches Material umfassen, das dazu bestimmt ist, den Brechungsindex zu beeinflussen.

13. Verfahren nach Anspruch 3, das einen Indexgradienten im Bereich von 0,02 bis 1,0 aufweist.

14. Verfahren nach Anspruch 13, wobei der mehrschichtige Polymerverbundfilm oder die mehrschichtige GRIN-Verbundfolie uniaxial oder biaxial verstreckt ist.

15. Gradienten-Brechungsindex-GRIN-Linse, wobei der Gradienten-Brechungsindex asphärisch ist, **dadurch gekennzeichnet, dass** die GRIN-Linse einen parabolischen Brechungsindexgradienten aufweist, wobei die Linse eine abgeflachte Ellipse mit einer ersten halbparabolischen GRIN-Verteilung und eine längliche Ellipse mit einer zweiten halbparabolischen GRIN-Verteilung durch die Linsendickenrichtung definiert, wobei der Brechungsindex in einer Richtung zur Peripherie der Linse hin abnimmt oder zunimmt, wobei die Linse umfasst:
eine koextrudierte, mehrschichtige GRIN-Verbundfolie mit einer asphärischen Form;
wobei die mehrschichtige Verbundfolie eine Vielzahl gestapelter, koextrudierter, mehrschichtiger Polymerverbundfilme umfasst;
wobei jeder der mehrschichtigen Polymerverbundfilme eine Vielzahl von mindestens zwei abwechselnden Schichten (A) und (B) enthält, die durch die Formel (AB)ₓ dargestellt werden, wobei x = 2ⁿ und n im Bereich von 4 bis 18 liegt;
wobei die Schicht (A) aus der Komponente (a) besteht und die Schicht (B) aus der Komponente (b) besteht; und
wobei die Komponenten (a) und (b) unterschiedliche Brechungsindizes aufweisen.

16. Linse nach Anspruch 15, wobei die Komponenten (a) und (b) Elastomere sind und die mehrschichtige Verbundfolie mechanisch und reversibel verformbar ist.

17. Linse nach Anspruch 15, wobei der Brechungsindex der mehrschichtigen GRIN-Verbundfolie mechanisch durch Druck, Zug, Verdichtung, Scherwirkung oder eine Kombination dieser Beanspruchungen verändert wird.

18. Linse nach Anspruch 15, die einen Indexgradienten im Bereich von 0,02 bis 1,0 aufweist.

19. Linse nach Anspruch 15, wobei die Folie eine abgeflachte Ellipse mit einer ersten halbparabolischen GRIN-Verteilung und eine längliche Ellipse mit einer zweiten halbparabolischen GRIN-Verteilung über die Linsenstärke definiert.

20. Linse nach Anspruch 16, wobei der Brechungsindex in einer Richtung zu einer Peripherie der Linse hin abnimmt.

## Revendications

1. Procédé de fabrication d'une lentille à gradient d'indice de réfraction, GRIN, comprenant :
la coextrusion d'un premier matériau polymère ayant un premier indice de réfraction et d'un second matériau polymère ayant un second indice de réfraction différent du premier indice de réfraction pour former des films composites polymères multicouches ;
l'assemblage des films composites polymères multicouche en une feuille GRIN composite multicouche ; et
la mise en forme de la feuille GRIN composite multicouche en une lentille GRIN asphérique, dans lequel le gradient d'indice de réfraction est asphérique, **caractérisé en ce que** la lentille a un gradient d'indice de réfraction parabolique, dans lequel la lentille définit une ellipse aplatie qui a une première distribution de GRIN semi-parabolique et une ellipse allongée qui a une seconde distribution de GRIN semi-parabolique à travers la direction de l'épaisseur de la lentille, dans lequel l'indice de réfraction diminue ou augmente dans une direction vers la périphérie de la lentille.

2. Procédé selon la revendication 1, dans lequel la feuille GRIN est thermoformée, moulée, et/ou usinée en une lentille GRIN asphérique.

3. Procédé selon la revendication 1, dans lequel chacun des films composites polymères multicouches comporte une pluralité d'au moins deux couches alternées (A) et (B) représentées par la formule (AB)ₓ, où x = 2", et n est dans la plage de 2 à 18 ;
dans lequel une couche (A) est constituée d'un composant (a), et couche (B) est constituée d'un composant (b) ; et
dans lequel les composants (a) et (b) ont des indices de réfraction différents.

4. Procédé selon la revendication 3, dans lequel les composants (a) et (b) sont sélectionnés dans le groupe consistant en un matériau polymère, un polymère composite et un mélange de polymères.

5. Procédé selon la revendication 4, dans lequel le matériau polymère est sélectionné dans le groupe consistant en un matériau vitreux, un matériau cristallin, un matériau cristallin liquide, et un matériau élastomère.

6. Procédé selon la revendication 3, dans lequel les couches ont une épaisseur de 5 nm à 1000 µm.

7. Procédé selon la revendication 3, dans lequel les films polymères composites multicouches sont empilés en couches ordonnées pour former une feuille GRIN composite multicouche hiérarchique ;
et dans lequel des films polymères composites multicouches adjacents sont choisis pour présenter des indices de réfraction différents progressivement.

8. Procédé selon la revendication 3, dans lequel le film polymère composite multicouche comprend au moins 10 couches alternées.

9. Procédé selon la revendication 3, dans lequel la feuille GRIN composite multicouche est constituée de 5 à 100 000 films composites polymères multicouches.

10. Procédé selon la revendication 3, dans lequel les composants (a) et (b) sont chimiquement les mêmes matériaux.

11. Procédé selon la revendication 4, dans lequel le matériau polymère est sélectionné dans le groupe consistant en un polyéthylène naphtalate, un isomère de celui-ci, un polyalkylène téréphtalate, un polyimide, un polyétherimide, un polymère styrénique, un polycarbonate, un poly(méth)acrylate, un dérivé de cellulose, un polymère de polyalkylène, un polymère fluoré, un polymère chloré, un polysulfone, un polyéthersulfone, un polyacrylonitrile, un polyamide, poly(acétate de vinyle), un polyéther-amide, un copolymère styrène-acrylonitrile, un copolymère styrène-éthylène, le poly(éthylène-1,4-cyclohexylènediméthylène téréphtalate), un caoutchouc acrylique, l'isoprène, l'isobutylène-isoprène, le caoutchouc butadiène, le butadiène-styrène-vinyle pyridine, le caoutchouc butyle, le polyéthylène, le chloroprène, le caoutchouc d'épichlorhydrine, l'éthylène-propylène, l'éthylène-propylène-diène, le nitrile-butadiène, le polyisoprène, le caoutchouc de silicone, le styrène-butadiène, le caoutchouc d'uréthane, et le polyoxyéthylène, le polyoxypropylène, et le tétrafluoroéthylène hexafluoropropylène vinylidène (THV).

12. Procédé selon la revendication 3, dans lequel les couches comprennent en outre un matériau organique ou inorganique conçu pour affecter l'indice de réfraction.

13. Procédé selon la revendication 3, présentant un gradient d'indice dans la plage de 0,02 à 1,0.

14. Procédé selon la revendication 13, dans lequel le film composite polymère multicouche ou la feuille GRIN composite multicouche est orienté de manière uniaxiale ou de manière biaxiale.

15. Lentille à gradient d'indice de réfraction, GRIN, dans laquelle le gradient d'indice de réfraction est asphérique, **caractérisée en ce que** la lentille GRIN a un gradient d'indice de réfraction parabolique, dans laquelle la lentille définit une ellipse aplatie qui a une première distribution de GRIN semi-parabolique et une ellipse allongée qui a une seconde distribution de GRIN semi-parabolique à travers la direction de l'épaisseur de la lentille, dans laquelle l'indice de réfraction diminue ou augmente dans une direction vers la périphérie de la lentille, la lentille comprenant :
une feuille GRIN composite multicouche coextrudée ayant une forme asphérique ;
dans laquelle la feuille composite multicouche comporte une pluralité de films composites polymères multicouche coextrudés empilés ;
dans laquelle chacun des films composites polymères multicouches comporte une pluralité d'au moins deux couches alternées (A) et (B) représentées par la formule (AB)ₓ, où x = 2ⁿ, et n est dans la plage de 4 à 18 ;
dans laquelle une couche (A) est constituée d'un composant (a), et une couche (B) est constituée d'un composant (b) ; et
dans laquelle les composants (a) et (b) ont des indices de réfraction différents.

16. Lentille selon la revendication 15, dans laquelle les composants (a) et (b) sont des élastomères et la feuille composite multicouche est mécaniquement et réversiblement déformable.

17. Lentille selon la revendication 15, dans laquelle l'indice de réfraction de la feuille GRIN composite multicouche est modifié mécaniquement par pression, tension, compression, cisaillement ou une combinaison de ces contraintes.

18. Lentille selon la revendication 15, présentant un gradient d'indice dans la plage de 0,02 à 1,0.

19. Lentille selon la revendication 15, dans laquelle la feuille définit une ellipse aplatie, qui a une première distribution de GRIN semi-parabolique, et une ellipse allongée, qui a une seconde distribution de GRIN semi-parabolique, à travers l'épaisseur de la lentille.

20. Lentille selon la revendication 16, dans laquelle l'indice de réfraction diminue dans une direction vers une périphérie de la lentille.
